# EUROPÄISCHE PATENTANMELDUNG

(11) **EP 1 541 341 A1**
(43) Veröffentlichungstag der Anmeldung: **15.06.2005**
(21) Anmeldenummer: 03405872.7
(22) Anmeldetag: 05.12.2003
(51) Int. Cl.: B32B 27/32, B32B 27/08

(54) **Mehrschichtiges Laminat mit beidseitig angeordneten Polyethylenfilmen**

(71) Anmelder: Alcan Technology & Management Ltd., 8212 Neuhausen am Rheinfall (CH)
(72) Erfinder: Hummel, Otto, 78224 Singen (DE); Senger, Karl-Heinz, 78239 Rielasingen (DE)

(57) **Zusammenfassung**

Bei einem Laminat (10) mit beidseitig angeordneten Kunststofffilmen umfasst wenigstens eine Seite des Laminates (10) einen beidseitig mit Polyethylen beschichteten Polypropylen -Compoundfilm (12). Der Compoundfilm führt zu einer Erhöhung der Laminatsteifigkeit, so dass zur Erzielung vorgegebener Steifigkeitsanforderungen ein kostengünstigeres Laminat mit geringerer Laminatdicke eingesetzt werden kann. Das Laminat eignet sich insbesondere zur Herstellung von Tubenrümpfen.

## Beschreibung

Die Erfindung betrifft ein mehrschichtiges Laminat mit beidseitig angeordneten Kunststofffilmen, wobei die Laminatoberflächen aus Polyethylen bestehen.

Zur Herstellung von Tuben werden heute unter anderem mehrschichtige Kunststofflaminate verwendet. Tuben mit einer so genannten Barriereschicht weisen zusätzlich eine im Innern der Laminate angeordnete Sperrschicht gegen den Durchtritt von Wasserdampf und Gasen, z.B. eine Aluminiumfolie, auf. Die Deckschichten, welche die Laminatoberflächen bilden, bestehen dabei aus Polyethylen, da bei der Herstellung des Tubenrumpfes aus Laminaten, die durch Extrusionskaschierung oder im Cast-Verfahren gefertigt werden, die Innenseite gegen die Aussenseite gesiegelt wird.

Tubenlaminate sind verhältnismässig teure Materialien. Es besteht daher der Wunsch nach einer kostengünstigeren Lösung.

Der Erfindung liegt die Aufgabe zugrunde, ein Laminat der eingangs genannten Art mit einem verringerten Kunststoffanteil zu schaffen, ohne dass die Reduktion der Laminatdicke zu einer unerwünschten Erniedrigung der Steifigkeit führt.

Zur erfindungsgemässen Lösung der Aufgabe führt, dass wenigstens eine Seite des Laminates einen beidseitig mit Polyethylen (PE) beschichteten Polypropylen-Compoundfilm umfasst.

Der erfindungsgemäss angeordnete Polypropylen-Compoundfilm verleiht dem Laminat eine höhere Steifigkeit, so dass die mit einem Laminat mit reinen Polyethylen-Schichten erzielbare Steifigkeit schon bei geringerer Laminatdicke erreicht wird. Der durch die reduzierte Dicke erniedrigte Materialbedarf führt letztlich zu einem kostengünstigeren Laminat.

Der Polypropylen-Compoundfilm kann z.B. ein Polypropylen/Polyethylen-Compoundfilm mit einem Anteil von vorzugsweise mehr als 50 Gew.-% Polypropylen sein.

Die auf beiden Seiten des Polypropylen-Compoundfilms angeordneten Polyethylenschichten weisen bevorzugt eine Dicke von 10 bis 30 µm auf. Die bevorzugte Dicke des Polypropylen-Compoundfilms liegt bevorzugt bei 20 bis 80 µm.

Bei einer besonders bevorzugten Ausführungsform des erfindungsgemässen Laminates umfassen beide Seiten des Laminates einen Polypropylen-Compoundfilm.

Eine der Laminatoberflächen kann beispielsweise ein LMDPE-, LLDPE- oder LDPE-Film oder ein Film aus geschäumtem Polyethylen sein.

Mit dem geschäumten Film aus Polyethylen kann zusätzliches Gewicht eingespart und eine weiter verbesserte Steifigkeit des Laminates erreicht werden. Zudem zeigt der geschäumte Film ein besseres Gleitverhalten u. a. gegen Stahl, wodurch die Tubenproduktion sicherer gemacht werden kann.

Zwischen den beiden Kunststofffilmen kann im Bedarfsfall eine Barriereschicht gegen den Durchtritt von Wasserdampf und Gasen angeordnet sein.

Die Sperrschicht gegen Gase, Dämpfe und Feuchtigkeit, die sog. Barriereschicht, kann eine Metallfolie aus beispielsweise Aluminium sein. Andere geeignete Materialien für Sperrschichten sind beispielsweise Filme aus Kunststoffen, wie Polyvinylidenchlorid (PVDC), Ethylvinylalkohol (EVOH), Polyamid (PA) oder Polyamid-Blends, im Dickenbereich zwischen etwa 3 und 25 µm, oder eine Schicht aus keramischen Materialien, wie beispielsweise aus Silizium- oder Aluminiumoxid bzw. -nitrid, die als dünne Schicht im Bereich von etwa 10 - 500 nm im Vakuum auf die Trägerfolie abgeschieden werden. Beispiele weiterer Sperrschichten sind metallische Schichten, z.B. aus Aluminium, die beispielsweise durch Sputtern oder durch Abscheidung aus dem Vakuum auf dem Kunststofffilm in einer Dicke von etwa 10 nm bis etwa 2 µm abgeschieden werden.

Im vorliegenden Fall ist insbesondere eine Aluminiumfolie geeignet, dem Laminat neben den Barriereeigenschaften, welche den Durchtritt von Flüssigkeiten, Gasen, Dämpfen, Wasserdampf, Aromen oder Geruchsstoffen verhindern, zusätzliche mechanische Stabilität zu verleihen.

Zwischen dem beidseitig mit Polyethylen beschichteten Polypropylen-Compoundfilm und der Aluminiumfolie ist bevorzugt eine Zwischenschicht aus coextrudiertem Polyethylen/Vinylacetat (VA) angeordnet.

Zwischen der Aluminiumfolie und einem der Kunststofffilme kann auch eine Zwischenschicht aus einem Ethylencopolymer, insbesondere einem EthylenAcrylsäure (E.AA)-Copolymer angeordnet sein.

Die bevorzugte Dicke der Aluminiumfolie liegt bei 5 bis 15 µm, die bevorzugte Gesamtdicke des Laminates beträgt 150 bis 250 µm.

Bevorzugt wird das erfindungsgemässe Laminat zur Herstellung von Tubenrümpfen verwendet.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1 den Aufbau einer ersten Ausführungsform eines Tubenlaminates;
- Fig. 2 den Aufbau einer zweiten Ausführungsform eines Tubenlaminates;
- Fig. 3 den Aufbau einer dritten Ausführungsform eines Tubenlaminates;
- Fig. 4 den Aufbau einer vierten Ausführungsform eines Tubenlaminates.

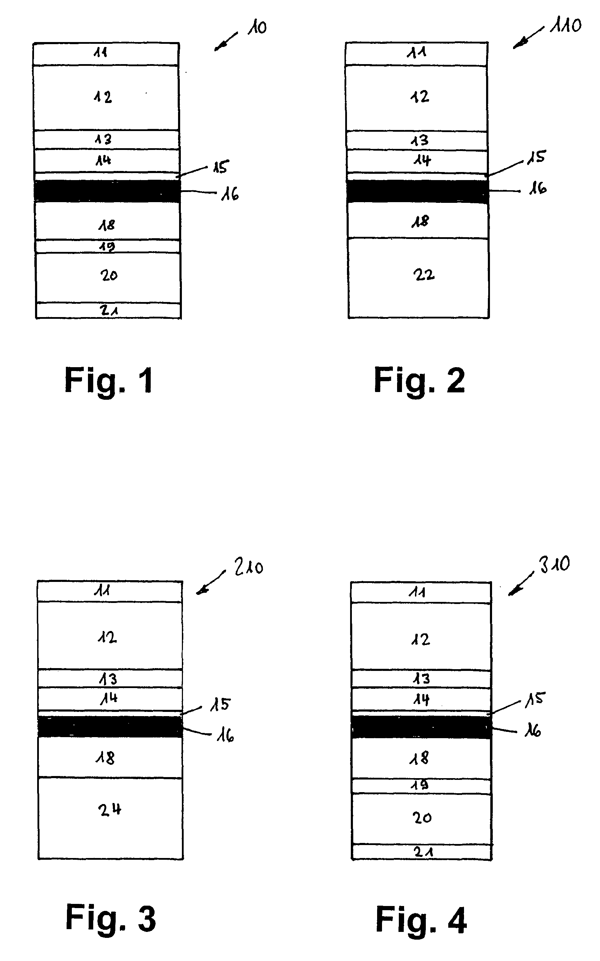

Fig. 1 zeigt den Aufbau eines ersten, eine Gesamtdicke von 175 µm aufweisenden Tubenlaminates 10, das von der Tubenaussenseite zur Tubeninnenseite hin den folgenden Aufbau aufweist:
- 11: PE-Film, 25 µm
- 12: PP/PE-Compoundfilm, weiss, 40 µm
- 13: PE-Film, 25 µm
- 14, 15: coextrudierter PENA-Film, weiss, 17 µm
- 16: Aluminiumfolie, 6,3 µm
- 18: E.AA-Copolymerfilm, 17 µm
- 19: PE-Film, 15 µm
- 20: PE/PP-Compoundfilm, 15 µm
- 21: PE-Film, 15 µm

Der PP/PE-Compoundfilm 12 mit den beidseitigen PE-Schichten 11, 13 und der PP/PE-Compoundfilm 20 mit den beidseitigen PE-Schichten 19, 21 werden beispielsweise coextrudiert und über den ebenfalls coextrudierten PENA-Film 14, 15 bzw. über den E.AA-Copolymerfilm 18 mit der Aluminiumfolie 16 laminiert.

Fig. 2 zeigt den Aufbau eines Tubenlaminates 110 entsprechend dem Tubenlaminat 10 von Fig. 1, wobei jedoch anstelle des PP/PE-Compoundfilms 20 mit den beidseitigen PE-Schichten 19, 21 ein geschäumter PE-Film 22 die Tubeninnenseite bildet. Das Tubenlaminat 110 mit einer Gesamtdicke von 200 µm weist von der Tubenaussenseite zur Tubeninnenseite hin den folgenden Aufbau auf:
- 11: PE-Film, 25 µm
- 12: PP/PE-Compoundfilm, weiss, 40 µm
- 13: PE-Film, 25 µm
- 14, 15: coextrudierter PE/VA-Film, weiss, 24 µm
- 16: Aluminiumfolie, 6,3 µm
- 18: E.AA-Copolymerfilm, 24 µm
- 22: PE-Film, geschäumt, 60 µm

Fig. 3 zeigt den Aufbau eines Tubenlaminates 210 entsprechend dem Tubenlaminat 110 von Fig. 1, wobei jedoch anstelle des PP/PE-Compoundfilms 20 mit den beidseitigen PE-Schichten 19, 21 ein LMDPE-Film 24 die Tubeninnenseite bildet. Das Tubenlaminat 210 mit einer Gesamtdicke von 200 µm weist von der Tubenaussenseite zur Tubeninnenseite hin den folgenden Aufbau auf:
- 14: PE-Film, 25 µm
- 15: PP/PE-Compoundfilm, weiss, 40 µm
- 16: PE-Film, 25 µm
- 14, 15: coextrudierter PENA-Film, weiss, 20 µm
- 16: Aluminiumfolie, 12 µm
- 18: E.AA-Copolymerfilm, 20 µm
- 24: LMDPE-Film, 60 µm

Fig. 4 zeigt den Aufbau eines Tubenlaminates 310 entsprechend dem Tubenlaminat 110 von Fig. 1. Das Tubenlaminat 310 mit einer Gesamtdicke von 200 µm weist von der Tubenaussenseite zur Tubeninnenseite hin den folgenden Aufbau auf:
- 17: PE-Film, 25 µm
- 18: PP/PE-Compoundfilm, weiss, 40 µm
- 19: PE-Film, 25 µm
- 14, 15: coextrudierter PE/VA-Film, weiss, 27 µm
- 16: Aluminiumfolie, 12 µm
- 18: E.AA-Copolymerfilm, 27 µm
- 19: PE-Film, 15 µm
- 20: . PE/PP-Compoundfilm, 15 µm
- 21: PE-Film, 15 µm

## Patentansprüche

1. Laminat mit beidseitig angeordneten Kunststofffilmen, wobei die Laminatoberflächen aus Polyethylen bestehen,
**dadurch gekennzeichnet, dass**
wenigstens eine Seite des Laminates (10, 110, 210, 310) einen beidseitig mit Polyethylen beschichteten Polypropylen-Compoundfilm (12) umfasst.

2. Laminat nach Anspruch 1, **dadurch gekennzeichnet, dass** der Polypropylen-Compoundfilm (12) ein Polypropylen/Polyethylen-Compoundfilm mit einem Anteil von vorzugsweise mehr als 50 Gew.-% Polypropylen ist.

3. Laminat nach Anspruch 1 oder2, **dadurch gekennzeichnet, dass** die auf beiden Seiten des Polypropylen-Compoundfilms (12) angeordneten Polyethylenschichten (11, 13) eine Dicke von 10 bis 30 µm aufweisen.

4. Laminat nach einem der Ansprüche 1 bis 3, **dadurch gekennzeichnet, dass** der Polypropylen-Compoundfilm (12) eine Dicke von 20 bis 80 µm aufweist.

5. Laminat nach einem der Ansprüche 1 bis 4, **dadurch gekennzeichnet, dass** beide Seiten des Laminates (10, 110, 210, 310) einen Polypropylen-Compoundfilm (12) umfassen.

6. Laminat nach einem der Ansprüche 1 bis 4, **dadurch gekennzeichnet, dass** eine der Laminatoberflächen von einem LMDPE-, LLDPE- oder LDPE-Film oder einem Film aus geschäumtem Polyethylen gebildet ist.

7. Laminat nach einem der Ansprüche 1 bis 6, **dadurch gekennzeichnet, dass** zwischen den beiden Kunststofffilmen eine Barriereschicht gegen den Durchtritt von Wasserdampf und Gasen angeordnet ist.

8. Laminat nach Anspruch 7, **dadurch gekennzeichnet, dass** als Barriereschicht eine Metallfolie, insbesondere eine Aluminiumfolie (16), ein Kunststofffilm aus Polyvinylidenchlorid (PVDC), Ethylvinylalkohol (EVOH), Polyamid (PA) oder Polyamid-Blends, eine Schicht aus keramischen Materialien, insbesondere aus Silizium- oder Aluminiumoxid bzw. -nitrid, die als dünne Schicht aus dem Vakuum auf dem Kunststoffilm abgeschieden wird, oder eine metallische Schicht, insbesondere aus Aluminium, die durch Sputtern oder aus dem Vakuum auf dem Kunststofffilm abgeschieden wird, verwendet wird.

9. Laminat nach Anspruch 8, **dadurch gekennzeichnet, dass** zwischen dem beidseitig mit Polyethylen beschichteten Polypropylen-Compoundfilm und der Aluminiumfolie (16) eine Zwischenschicht aus einem coextrudierten Polyethylen/Vinylacetat-Laminat angeordnet ist.

10. Laminat nach Anspruch 8, **dadurch gekennzeichnet, dass** zwischen der Aluminiumfolie (16) und einem der Kunststofffilme eine Zwischenschicht aus einem Polyethylen-Copolymer, insbesondere einem Ethylen/Acrylsäure-Copolymer, angeordnet ist.

11. Laminat nach einem der Ansprüche 8 bis 10, **dadurch gekennzeichnet, dass** die Aluminiumfolie (16) eine Dicke von 5 bis 15 µm aufweist.

12. Laminat nach einem der Ansprüche 1 bis 11, **dadurch gekennzeichnet, dass** die Gesamtdicke 150 bis 250 µm beträgt.

13. Verwendung eines Laminates nach Anspruch 12 für Tubenrümpfe.
